# EUROPEAN PATENT APPLICATION

(11) **EP 4 718 669 A1**
(43) Date of publication of application: **01.04.2026**
(21) Application number: 25151789.2
(22) Date of filing: 14.01.2025
(51) Int. Cl.: H02J 7/00

(54) **EXTENDED CHARGING DEVICE**

(30) Priority: 26.09.2024 CN 202422358871 U
(71) Applicant: DELTA ELECTRONICS, INC., Taoyuan City 320023 (TW)
(72) Inventor: Lu, Ting Yun, 320023 Taoyuan City (TW); Cheng, Kuo Wei, 320023 Taoyuan City (TW); Yang, Jyun Han, 320023 Taoyuan City (TW)
(74) Representative: Murgitroyd & Company

(57) **Abstract**

An extended charging device is provided. The extended charging device comprises an AC/DC conversion unit (2), at least one DC/DC conversion unit (3), a microcontroller (4), and a plurality of charging units (5), wherein a control switch (52) of each charging unit (5) is coupled between the output of the DC/DC conversion unit (3) and the battery holder (51). The DC/DC conversion unit (3) only charges a single battery at a time by controlling the control switch (52) of each charging unit (5) with the microcontroller (4), which can effectively avoid the situation where a fully charged battery continues to be charged, thereby reducing unnecessary energy loss.

## Description

### CROSS REFERENCE TO RELATED APPLICATIONS

This application claims the priority of Chinese Application No. 202422358871.2, filed on September 26, 2024, the disclosure of which is incorporated herein by reference.

### FIELD OF INVENTION

The present disclosure relates to a charging device, and in particular, relates to an extended charging device.

### BACKGROUND OF INVENTION

Battery chargers are commonly used in automotive, industrial, and household applications to recharge the battery of a tool's power source. However, a traditional battery charger typically includes an AC/DC converter that requires multiple DC/DC converters to charge individual batteries. The corresponding expansion cost is high. When a battery is fully charged, continuing to charge it would cause power consumption loss in standby mode. While trying to stop charging a fully charged battery, complex control strategies are required and the number of battery charges would also be limited.

As a result, it is necessary to provide an extended charging device to solve the problems existing in the conventional technologies, as described above.

### SUMMARY OF INVENTION

An object of the present disclosure is to provide an extended charging device, wherein the DC/DC conversion unit only charges a single battery at a time by controlling the control switch of each charging unit with a microcontroller, which can effectively avoid the situation where a fully charged battery continues to be charged, thereby reducing unnecessary energy loss.

To achieve the above object, the present disclosure provides an extended charging device for charging a plurality of batteries, wherein the extended charging device comprises an AC/DC conversion unit, at least one DC/DC conversion unit, a microcontroller, and a plurality of charging units; the AC/DC conversion unit comprises an input and an output, the input is coupled to an AC power supply, and the AC/DC conversion unit is configured to convert AC power of the AC power supply into a first DC power; the DC/DC conversion unit comprises an input and an output, the input is coupled to the output of the AC/DC conversion unit, and the DC/DC conversion unit is configured to convert the first DC power into a second DC power; the microcontroller is coupled to the DC/DC conversion unit; the charging units are coupled to the DC/DC conversion unit, wherein each of the charging units comprises a battery holder and a control switch; the battery holder is configured to hold a corresponding battery; the control switch is coupled between the output of the DC/DC conversion unit and the battery holder; and the control switch is configured to be turned on to import the second DC power for charging the battery and turned off to stop charging the battery.

In one embodiment of the present disclosure, the extended charging device further comprises a battery voltage detection unit coupled between the battery holders of the charging units and the microcontroller; the battery voltage detection unit is configured to detect a voltage of a battery installed in the corresponding battery holder to obtain a voltage detection value and transmit the voltage detection value to the microcontroller.

In one embodiment of the present disclosure, the microcontroller coupled to the battery voltage detection unit is configured to determine different charging powers based on the magnitude of the voltage detection value.

In one embodiment of the present disclosure, the extended charging device further comprises a battery arranging unit coupled to the microcontroller; the battery arranging unit is configured to receive a plurality of voltage detection values from the microcontroller and arrange the voltage detection values in order based on an arrangement rule to generate a charging sequence list of batteries corresponding to the battery holders.

In one embodiment of the present disclosure, the extended charging device further comprises a sequence setting unit coupled to the microcontroller; the sequence setting unit is configured for a user to set the arrangement rule; the arrangement rule comprises arranging the voltage detection values in descending order and arranging the voltage detection values in ascending order.

In one embodiment of the present disclosure, the extended charging device further comprises a battery communication unit coupled between the battery holders and the microcontroller; the battery communication unit is configured to retrieve battery data of the battery corresponding to the battery holder, generate a current command based on the battery data, and transmit the current command to the microcontroller.

In one embodiment of the present disclosure, the extended charging device further comprises a body portion and at least one extension portion; the body portion is configured to be assembled with the extension portion; the AC/DC conversion unit and the DC/DC conversion unit are disposed in the body portion, and the charging units are disposed in the extension portion.

In one embodiment of the present disclosure, the extension portion comprises a control wire, a power wire, and a data wire; the control switches of the charging units are coupled to the microcontroller through the control wire, the control switches of the charging units are coupled to the DC/DC conversion unit through the power wire, and the battery holders of the charging units are coupled to the microcontroller through the data wire.

In one embodiment of the present disclosure, the body portion comprises a main engaging portion, the extension portion comprises a sub-engaging portion, and the main engaging portion is configured to engage the sub-engaging portion.

In one embodiment of the present disclosure, the extended charging device further comprises a body portion and at least one extension portion; the body portion is configured to be assembled with the extension portion; the AC/DC conversion unit are disposed in the body portion, and the DC/DC conversion unit and the charging units are disposed in the extension portion.

As described above, the plurality of charging units are all connected in parallel to the output of the DC/DC conversion unit, which can effectively reduce the number of DC/DC conversion units and save the installation cost of circuit components. Moreover, the control switch of each charging unit is controlled by the microcontroller, and only one battery is charged at a time, wherein there is no additional power consumption loss when the control switch is turned off in the standby mode, which can effectively avoid the situation where a fully charged battery continues to be charged, thereby reducing unnecessary energy loss.

### DESCRIPTION OF DRAWINGS

FIG. 1 is a schematic view of a circuit of an extended charging device according to an embodiment of the present disclosure.
FIG. 2 is a schematic view of a structure of the extended charging device according to an embodiment of the present disclosure.
FIG. 3 is a schematic view of the extended charging device provided with a first-stage extension module and a second-stage extension module according to an embodiment of the present disclosure.
FIG. 4 is a schematic view of a circuit of an extended charging device according to another embodiment of the present disclosure.

### DETAILED DESCRIPTION OF PREFERRED EMBODIMENTS

The structure and the technical means adopted by the present disclosure to achieve the above and other objects can be best understood by referring to the following detailed description of the preferred embodiments and the accompanying drawings. Furthermore, directional terms described by the present disclosure, such as upper, lower, front, back, left, right, inner, outer, side, longitudinal/vertical, transverse/horizontal, etc., are only directions by referring to the accompanying drawings, and thus the used directional terms are used to describe and understand the present disclosure, but the present disclosure is not limited thereto.

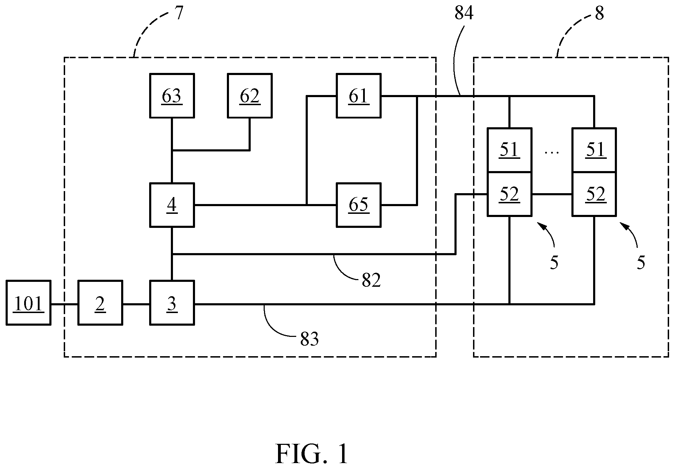

Referring to FIG. 1, FIG. 1 is a schematic view of a circuit of an extended charging device according to an embodiment of the present disclosure. The extended charging device is configured for charging a plurality of batteries, wherein the extended charging device comprises an AC/DC conversion unit 2, at least one DC/DC conversion unit 3, a microcontroller 4, and a plurality of charging units 5, a battery voltage detection unit 61, a battery arranging unit 62, a sequence setting unit 63, and a battery communication unit 65.

Specifically, the AC/DC conversion unit 2 comprises an input and an output, wherein the input of the AC/DC conversion unit 2 is coupled to an AC power supply 101. The AC/DC conversion unit 2 is configured to convert the AC power of the AC power supply into a first DC power. The DC/DC conversion unit 3 comprises an input and an output, wherein the input of the DC/DC conversion unit 3 is coupled to the output of the AC/DC conversion unit 2, and the DC/DC conversion unit 3 is configured to convert the first DC power into a second DC power. Furthermore, the microcontroller 4 is coupled to the DC/DC conversion unit 3, and the microcontroller 4 is configured to control the second DC power output by the DC/DC conversion unit 3, for example, controlling the second DC power output by the DC/DC conversion unit 3 to be 5 amps or 10 amps.

The plurality of charging units 5 are coupled to the DC/DC conversion unit 3. Each of the charging units 5 comprises a battery holder 51 and a control switch 52, wherein the battery holder 51 is configured to hold a corresponding battery; the control switch 52 may be, for example, a relay, which is coupled between the output of the DC/DC conversion unit 3 and the battery holder 51; the microcontroller 4 is also coupled to the control switch 52 of the charging units 5. In the embodiment, the microcontroller 4 can operate the control switch 52 to be turned on or turned off. When the control switch 52 is operated to be turned on, the second DC power imported into the DC/DC conversion unit 3 charges the battery; when the control switch 52 is operated to be turned off, charging of the battery is stopped.

The battery voltage detection unit 61 is coupled between the battery holders 51 of the charging units 5 and the microcontroller 4; the battery voltage detection unit 61 is configured to detect a voltage of a battery installed in the corresponding battery holder 51 to obtain a voltage detection value and transmit the voltage detection value to the microcontroller 4. For example, when the battery voltage detection unit 61 detects a battery that has exhausted its power, its voltage detection value is 0V; when the battery voltage detection unit 61 detects a battery that has not exhausted its power, its voltage detection value is 5V.

Furthermore, with the voltage detection value detected by the battery voltage detection unit 61, the microcontroller 4 is configured to determine different charging powers for charging the battery based on the magnitude of the voltage detection value. Specifically, the microcontroller 4 can determine the battery status based on the voltage detection value. According to the battery status, a user can determine the setting value of the DC power required to charge the battery through the microcontroller 4. For example, if the voltage detection value of the battery is low, the user can set the second DC power to 10 amps through the microcontroller 4, thereby increasing the charging power and shortening the charging time through fast charging; if the voltage detection value of the battery is high, the user can set the second DC power to 5 amps through the microcontroller 4, thereby reducing the charging power and performing slow charging with a small current. The relationship between the voltage level and the current level can also be pre-written into the microcontroller 4 through firmware, eliminating the need for the user to set it by himself.

The battery arranging unit 62 is coupled to the microcontroller 4, wherein the battery arranging unit 62 is configured to receive a plurality of voltage detection values from the microcontroller 4 and arrange the voltage detection values in order based on an arrangement rule to generate a charging sequence list of batteries corresponding to the battery holders 51. In the embodiment, the arrangement rule is preset to arrange the plurality of voltage detection values in ascending order, and then turn on the corresponding control switch 52 through the microcontroller 4 according to the charging sequence list to charge the battery. For example, if the voltage detection values of batteries are arranged into 9V, 10V, 11V, 11.5V, 11.7V, 12V, 12.1, and 12.5V, and then the batteries are charged one by one according to the charging sequence list.

The sequence setting unit 63 is coupled to the microcontroller 4, wherein the sequence setting unit 63 is configured for the user to set the arrangement rule; the arrangement rule comprises arranging the voltage detection values in descending order, arranging the voltage detection values in ascending order, and arranging the voltage detection values in random order. The user can decide whether to start charging from the battery with the lowest voltage detection value or the highest voltage detection value through the sequence setting unit 63, thereby managing the sequencing of the batteries and charging the batteries sequentially. In one embodiment, if the voltage detection value is an abnormal value, it can be eliminated from the charging sequence list and the battery status is determined to be abnormal. Moreover, if no battery is installed in the battery holder 51, its detected voltage detection value (none) will also be recorded.

The battery communication unit 65 is coupled between the battery holders 51 and the microcontroller 4, wherein the battery communication unit 65 is configured to retrieve battery data of the battery corresponding to the battery holder 51, generate a current command based on the battery data, and transmit the current command to the microcontroller 4. Specifically, the battery communication unit 65 detects real-time battery data and feeds the current command to the microcontroller 4 according to the battery data, and then the microcontroller 4 operates the second DC power of the DC/DC conversion unit 3 to charge the battery. In the embodiment, the battery data includes capacity (Ah), current, and temperature conditions.

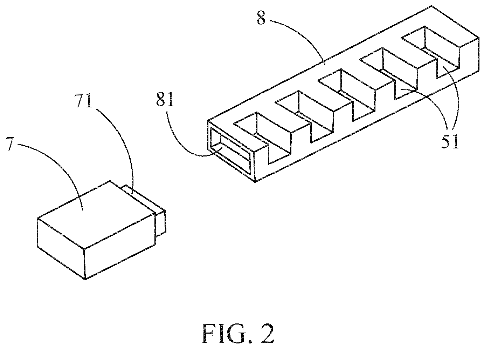

Referring to FIG. 1 and FIG. 2, FIG. 2 is a schematic view of the structure of the extended charging device according to an embodiment of the present disclosure. The extended charging device further comprises a body portion 7 and at least one extension portion 8. In the embodiment, the body portion 7 is configured to be assembled with the extension portion 8; the AC/DC conversion unit 2, the DC/DC conversion unit 3, the microcontroller 4, the battery voltage detection unit 61, the battery arranging unit 62, the sequence setting unit 63, and the battery communication unit 65 are disposed in the body portion 7; the plurality of charging units 5 are disposed in the extension portion 8. The body portion 7 comprises a main engaging portion 71, the extension portion 8 comprises a sub-engaging portion 81, and the main engaging portion 71 is configured to engage the sub-engaging portion 81.

Moreover, the extension portion 8 comprises a control wire 82, a power wire 83, and a data wire 84; the control switches 52 of the charging units 5 are coupled to the microcontroller 4 through the control wire 82; the control switches 52 of the charging units 5 are coupled to the DC/DC conversion unit 3 through the power wire 83, and the battery holders 51 of the charging units 5 are coupled to the microcontroller 4 through the data wire 84.

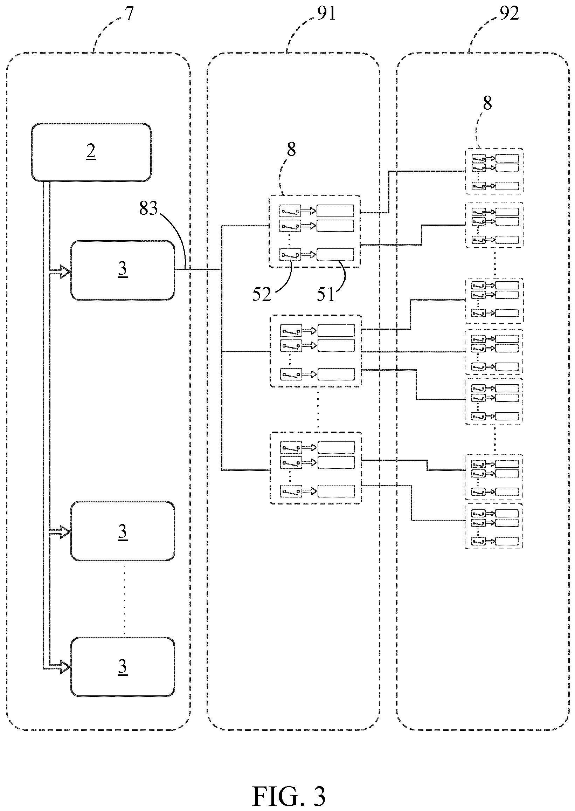

Referring to FIG. 1 and FIG. 3, FIG. 3 is a schematic view of the extended charging device provided with a first-stage extension module and a second-stage extension module according to an embodiment of the present disclosure. In the embodiment, the plurality of extension portion 8 can be installed in a first-stage extension module 91 and a second-stage extension module 92, and the first-stage extension module 91 is combined between the body portion 7 and the second-stage extension module 92. The plurality of extension portion 8 is located in the first-stage extension module 91 and the second-stage extension module 92, wherein the control wire 82 is coupled to the microcontroller 4, the power wire 83 is coupled to the DC/DC conversion unit 3, and the data wire 84 is coupled to the battery voltage detection unit 61 and the battery communication unit 65, so that the charging module can be easily expanded to increase the number of rechargeable batteries. Furthermore, the plurality of battery holders 51 can be installed with batteries with different capacities, so that the first-stage extension module 91 and the second-stage extension module 92 are used to provide a wider range of wattage applications for battery charging.

According to the above structure, the charging units 5 in the multiple extension portions 8 are essentially connected in parallel to the output of the DC/DC conversion unit 3, wherein the microcontroller 4 controls the control switch 52 of each charging unit 5 to be turned on or turned off and starts charging from the lowest voltage (or the highest voltage) according to the voltages of the batteries installed in the battery holder 51. In each charge, the microcontroller 4 only turns on one control switch 52, so that the DC/DC conversion unit 3 only charges one battery. After the battery is fully charged, the control switch 52 will be turned off; then, another control switch 52 is turned on to allow the DC/DC conversion unit 3 to charge another battery. It provides a more flexible strategy for battery charging control and greater controllability of charging.

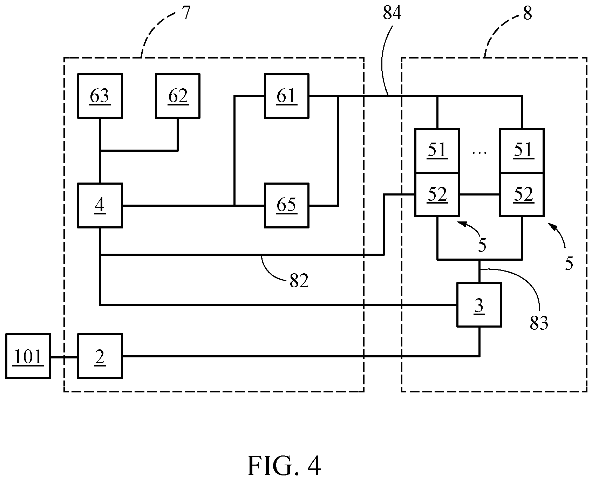

In another embodiment, as shown in FIG. 4, FIG. 4 is a schematic view of a circuit of an extended charging device according to another embodiment of the present disclosure. The extended charging device further comprises a body portion 7 and at least one extension portion 8, wherein the body portion 7 is configured to be assembled with the extension portion 8. The AC/DC conversion unit 2, the microcontroller 4, the battery voltage detection unit 61, the battery arranging unit 62, the sequence setting unit 63, and the battery communication unit 65 are disposed in the body portion 7; the DC/DC conversion unit 3 and the plurality of charging units 5 are disposed in the extension portion, so that the DC/DC conversion unit 3 corresponding to the battery can be arranged more flexibly.

As described above, the plurality of charging units 5 are all connected in parallel to the output of the DC/DC conversion unit 3, which can effectively reduce the number of DC/DC conversion units 3 and save the installation cost of circuit components. Moreover, the control switch 52 of each charging unit 5 is controlled by the microcontroller 4, and only one battery is charged at a time, wherein there is no additional power consumption loss when the control switch 52 is turned off in the standby mode, which can effectively avoid the situation where a fully charged battery continues to be charged, thereby reducing unnecessary energy loss.

The present disclosure has been described with preferred embodiments thereof and it is understood that many changes and modifications to the described embodiments can be carried out without departing from the scope and the spirit of the invention that is intended to be limited only by the appended claims.

## Claims

1. An extended charging device for charging a plurality of batteries, **characterized in that** the extended charging device comprises:
an AC/DC conversion unit (2) comprising an input and an output, wherein the input is coupled to an AC power supply (101), and the AC/DC conversion unit (2) is configured to convert AC power of the AC power supply (101) into a first DC power;
at least one DC/DC conversion unit (3) comprising an input and an output, wherein the input is coupled to the output of the AC/DC conversion unit (2), and the DC/DC conversion unit (3) is configured to convert the first DC power into a second DC power;
a microcontroller (4) coupled to the DC/DC conversion unit (3); and a plurality of charging units (5) coupled to the DC/DC conversion unit (3), wherein each of the charging units (5) comprises a battery holder (51) and
a control switch (52); the battery holder (51) is configured to hold a corresponding battery; the control switch (52) is coupled between the output of the DC/DC conversion unit (3) and the battery holder (51); and
the control switch (52) is configured to be turned on to import the second DC power for charging the battery and turned off to stop charging the battery.

2. The extended charging device according to claim 1, **characterized in that** the extended charging device further comprises a battery voltage detection unit (61) coupled between the battery holders (51) of the charging units (5) and the microcontroller (4); the battery voltage detection unit (61) is configured to detect a voltage of a battery installed in the corresponding battery holder (51) to obtain a voltage detection value and transmit the voltage detection value to the microcontroller (4).

3. The extended charging device according to claim 2, **characterized in that** the microcontroller (4) coupled to the battery voltage detection unit (61) is configured to determine different charging powers based on the magnitude of the voltage detection value.

4. The extended charging device according to claim 2, **characterized in that** the extended charging device further comprises a battery arranging unit (62) coupled to the microcontroller (4); the battery arranging unit (62) is configured to receive a plurality of voltage detection values from the microcontroller (4) and arrange the voltage detection values in order based on an arrangement rule to generate a charging sequence list of batteries corresponding to the battery holders (51).

5. The extended charging device according to claim 4, **characterized in that** the extended charging device further comprises a sequence setting unit (63) coupled to the microcontroller (4); the sequence setting unit (63) is configured for a user to set the arrangement rule; the arrangement rule comprises arranging the voltage detection values in descending order and arranging the voltage detection values in ascending order.

6. The extended charging device according to claim 1, **characterized in that** the extended charging device further comprises a battery communication unit (65) coupled between the battery holders (51) and the microcontroller (4); the battery communication unit (65) is configured to retrieve battery data of the battery corresponding to the battery holder (51), generate a current command based on the battery data, and transmit the current command to the microcontroller (4).

7. The extended charging device according to claim 1, **characterized in that** the extended charging device further comprises a body portion (7) and at least one extension portion (8); the body portion (7) is configured to be assembled with the extension portion (8); the AC/DC conversion unit (2) and the DC/DC conversion unit (3) are disposed in the body portion (7), and the charging units (5) are disposed in the extension portion (8).

8. The extended charging device according to claim 7, **characterized in that** the extension portion (8) comprises a control wire (82), a power wire (83), and a data wire (84); the control switches (52) of the charging units (5) are coupled to the microcontroller (4) through the control wire (82), the control switches (52) of the charging units (5) are coupled to the DC/DC conversion unit (3) through the power wire (83), and the battery holders (51) of the charging units (5) are coupled to the microcontroller (4) through the data wire (84).

9. The extended charging device according to claim 7, **characterized in that** the body portion (7) comprises a main engaging portion, the extension portion (8) comprises a sub-engaging portion (81), and the main engaging portion is configured to engage the sub-engaging portion (81).

10. The extended charging device according to claim 1, **characterized in that** the extended charging device further comprises a body portion (7) and at least one extension portion (8); the body portion (7) is configured to be assembled with the extension portion (8); the AC/DC conversion unit (2) are disposed in the body portion (7), and the DC/DC conversion unit (3) and the charging units (5) are disposed in the extension portion (8).

## Amended claims

### Amended claims in accordance with Rule 137(2) EPC.

1. A charging device for charging a plurality of batteries, comprising:
an AC/DC conversion unit (2) comprising an input and an output, wherein the input is coupled to an AC power supply (101), and the AC/DC conversion unit (2) is configured to convert AC power of the AC power supply (101) into a first DC power;
at least one DC/DC conversion unit (3) comprising an input and an output, wherein the input is coupled to the output of the AC/DC conversion unit (2), and the DC/DC conversion unit (3) is configured to convert the first DC power into a second DC power;
a microcontroller (4) coupled to the DC/DC conversion unit (3); and
a plurality of charging units (5) coupled to the DC/DC conversion unit (3), **characterized in that** each of the charging units (5) comprises a battery holder (51) and a control switch (52); the battery holder (51) is configured to hold a corresponding battery; the control switch (52) is coupled between the output of the DC/DC conversion unit (3) and the battery holder (51); and the control switch (52) is configured to be turned on to import the second DC power for charging the battery and turned off to stop charging the battery.

2. The charging device according to claim 1, **characterized in that** the charging device further comprises a battery voltage detection unit (61) coupled between the battery holders (51) of the charging units (5) and the microcontroller (4); the battery voltage detection unit (61) is configured to detect a voltage of a battery installed in the corresponding battery holder (51) to obtain a voltage detection value and transmit the voltage detection value to the microcontroller (4).

3. The charging device according to claim 2, **characterized in that** the microcontroller (4) coupled to the battery voltage detection unit (61) is configured to determine different charging powers based on the magnitude of the voltage detection value.

4. The charging device according to claim 2, **characterized in that** the charging device further comprises a battery arranging unit (62) coupled to the microcontroller (4); the battery arranging unit (62) is configured to receive a plurality of voltage detection values from the microcontroller (4) and arrange the voltage detection values in order based on an arrangement rule to generate a charging sequence list of batteries corresponding to the battery holders (51).

5. The charging device according to claim 4, **characterized in that** the charging device further comprises a sequence setting unit (63) coupled to the microcontroller (4); the sequence setting unit (63) is configured for a user to set the arrangement rule; the arrangement rule comprises arranging the voltage detection values in descending order and arranging the voltage detection values in ascending order.

6. The charging device according to claim 1, **characterized in that** the charging device further comprises a battery communication unit (65) coupled between the battery holders (51) and the microcontroller (4); the battery communication unit (65) is configured to retrieve battery data of the battery corresponding to the battery holder (51), generate a current command based on the battery data, and transmit the current command to the microcontroller (4).

7. The charging device according to claim 1, **characterized in that** the charging device further comprises a body portion (7) and at least one extension portion (8); the body portion (7) is configured to be assembled with the extension portion (8); the AC/DC conversion unit (2) and the DC/DC conversion unit (3) are disposed in the body portion (7), and the charging units (5) are disposed in the extension portion (8).

8. The charging device according to claim 7, **characterized in that** the extension portion (8) comprises a control wire (82), a power wire (83), and a data wire (84); the control switches (52) of the charging units (5) are coupled to the microcontroller (4) through the control wire (82), the control switches (52) of the charging units (5) are coupled to the DC/DC conversion unit (3) through the power wire (83), and the battery holders (51) of the charging units (5) are coupled to the microcontroller (4) through the data wire (84).

9. The charging device according to claim 7, **characterized in that** the body portion (7) comprises a main engaging portion, the extension portion (8) comprises a sub-engaging portion (81), and the main engaging portion is configured to engage the sub-engaging portion (81).

10. The charging device according to claim 1, **characterized in that** the charging device further comprises a body portion (7) and at least one extension portion (8); the body portion (7) is configured to be assembled with the extension portion (8); the AC/DC conversion unit (2) are disposed in the body portion (7), and the DC/DC conversion unit (3) and the charging units (5) are disposed in the extension portion (8).
